# EUROPÄISCHE PATENTANMELDUNG

(11) **EP 3 165 880 A1**
(43) Veröffentlichungstag der Anmeldung: **10.05.2017**
(21) Anmeldenummer: 16197410.0
(22) Anmeldetag: 04.11.2016
(51) Int. Cl.: G01F 11/00, B05C 11/10, B05C 17/00, G01F 15/00

(54) **PNEUMATIK-MODUL, DOSIERKOPF UND MASCHINENKOPF FÜR EINE DOSIERVORRICHTUNG**

(30) Priorität: 05.11.2015 DE 102015119014; 05.11.2015 DE 202015105912 U
(71) Anmelder: MARTIN GmbH, 82234 Wessling (DE)
(72) Erfinder: Frischkorn, Felix, 86911 Diessen am Ammersee (DE)
(74) Vertreter: LS-MP von Puttkamer Berngruber Loth Spuhler

(57) **Zusammenfassung**

Pneumatik-Modul einer Dosiereinrichtung (1) zur Beaufschlagung eines in einem Behälter (11) angeordneten Mediums (44) mit einem Unterdruck oder einem Überdruck, wobei der Behälter (11) einen Fluidvorrat (35) aufnimmt, auf den das Medium (44) einwirkt.

Das Pneumatik-Modul (30) weist wenigstens ein den Überdruck und/oder den Unterdruck des Mediums (44) einstellendes Ventil (21; 22) auf und/oder umfasst wenigstens einen Sensor (26), der physikalische und/oder chemische Eigenschaften des Mediums (44) misst.

## Beschreibung

Die Erfindung betrifft ein Pneumatik-Modul einer Dosiereinrichtung zur Beaufschlagung eines in einem Behälter angeordneten Mediums mit einem Unterdruck oder einem Überdruck, wobei der Behälter einen Fluidvorrat aufnimmt, auf den das Medium einwirkt.

Die Erfindung betrifft weiter einen Dosierkopf einer Dosiereinrichtung zur Aufbringung eines Fluids aus dem Behälter für den Fluid-Vorrat über eine Fluid-Auslassöffnung, auf ein Substrat, wobei der Behälter auf der von der Auslassöffnung abgewandten Seite des Fluidvorrats einen Bereich aufweist, in dem das beaufschlagbare Medium angeordnet ist. Die Fluid-Auslassöffnung wird im Weiteren als Dosierdüse bezeichnet.

Die Erfindung betrifft darüber hinaus einen Maschinenkopf einer Dosiereinrichtung zur Bewegung wenigstens der die Dosierdüse des Dosierkopfes umfassenden Einrichtung relativ zum Substrat zur Aufbringung des Fluids auf das Substrat.

Aus der EP 0 304 396 A1 ist ein Verfahren zum Dosieren und Auftragen von flüssigen oder pastösen Medien auf einen Gegenstand bekannt, bei dem ein mit dem Medium gefülltes Dosiergerät jeweils relativ zu dem Gegenstand positioniert ist.

Das Dosiergerät wird mit einem Druck beaufschlagt, wobei über eine Steuer- und Regeleinheit die Druckbeaufschlagung derart gesteuert wird, dass vorwählbare Dosierungen der Medien geliefert werden.

Der Füllstand des Mediums wird in dem Dosiergerät erfasst und die Druckbeaufschlagung wird abhängig vom Füllstand verändert.

Es ist bekannt, dass zwischen der Einrichtung zur Herstellung des Überdrucks oder des Unterdrucks und dem Aufnahmebehälter für das Medium, an dem der Überdruck oder der Unterdruck eingestellt werden soll, Druckverluste auftreten.

Es können direkte Druckverluste vorliegen, die durch Undichtigkeiten im Bereich der Ventile oder Leitungen auftreten, die das Medium befördern.

Zusätzlich können indirekte Druckverluste entstehen, die auf die Dimensionierung der Druckluftleitung zurückzuführen sind. In besonders langen Leitungen zur Beförderung des Mediums oder in Leitungen mit großen Durchmessern kann der Druck des Mediums in der Leitung mit zunehmender Länge der Leitung abnehmen.

Eine von einer Soll-Temperatur des Mediums abweichende Ist-Temperatur kann darüber hinaus dazu führen, dass sich die Viskosität des Mediums über die Länge der Leitung verändert.

Es ist daher eine Aufgabe der Erfindung, eine Dosiereinrichtung mit einem Pneumatik-Modul, einem Dosierkopf und einem Maschinenkopf bereitzustellen, bei der während des Transports des Mediums keine oder nur geringe Druckschwankungen in den Leitungen oder in dem Bereich des Behälters auftreten, in denen das Medium transportiert wird / in dem das Medium angeordnet ist.

Eine weitere Aufgabe der vorliegenden Erfindung besteht in der Minimierung der Bauform der Dosiereinrichtung.

Die Aufgabe wird gelöst durch ein Pneumatik-Modul einer Dosiereinrichtung nach Anspruch 1, durch einen Dosierkopf einer Dosiereinrichtung nach Anspruch 8 und durch einen Maschinenkopf einer Dosiereinrichtung nach Anspruch 11.

Dosiereinrichtungen dienen der Bereitstellung von Fluiden wie z. B. Flüssigkeiten oder Gasen in einer vorgegebenen Menge über einen vorgegebenen Zeitraum.

Die Dosiereinrichtung umfasst einen Behälter zur Aufnahme des Fluids und einen Dosierkopf zur Aufbringung des Fluids auf ein Substrat. Es ist ein Sensor vorgesehen, vorzugsweise zum Messen des Druckes des Fluids im Behälter.

Darüber hinaus ist im Behälter ein Medium vorgesehen, mit dem das Fluid durch die Dosierdüse aus dem Behälter herausgefördert wird.

Die Dosiereinrichtung umfasst darüber hinaus eine Steuereinrichtung, die vorzugsweise im Behälter oder in wenigstens einer Schlauchleitung, die der Zuführung der Druckluft zum Behälter dient, den Unterdruck oder den Überdruck des Mediums einstellt. Hierzu ist in der Steuereinrichtung wenigstens ein Ventil vorgesehen.

Darüber hinaus sind Sensoren, insbesondere Drucksensoren vorgesehen, die den Druck des Mediums messen.

Das Medium ist flüssig oder gasförmig. Es ist mit einem Druck beaufschlagbar. An das Medium ist ebenso ein Unterdruck anlegbar.

Im Folgenden wird beispielhaft, aber nicht ausschließlich davon ausgegangen, dass es sich bei dem Medium um Druckluft handelt.

Zur Erzeugung der Druckluft am Medium werden vorzugsweise Kolbenkompressoren oder Schraubenverdichter verwendet. Daneben können auch Rotationskompressoren oder Membrankompressoren zum Einsatz kommen.

Zur Erzeugung eines Unterdrucks am Medium werden vorzugsweise Vakuumpumpen eingesetzt. Die Vakuumpumpe kann eine Gastransfervakuumpumpe oder eine gasbindende Vakuumpumpe sein.

Zur Einstellung des Überdrucks oder des Unterdrucks an dem Medium ist die Steuereinrichtung über Leitungen mit dem Behälter verbunden.

Die vorausgehende Aufzählung ist lediglich beispielhaft und in keiner Weise ausschließlich gemeint. Es versteht sich von selbst, dass zur Erzeugung des Überdrucks und des Unterdrucks auch andere technische Einrichtungen Verwendung finden können.

Es ist ein Pneumatik-Modul angeordnet, mit dem an der am Behälter befindlichen Luft ein Überdruck angelegt werden kann. Über das Pneumatik-Modul kann nach Entlüftung der Schlauchleitungen auch ein Unterdruck bzw. ein Vakuum an dem Behälter eingestellt werden, das auf das Fluid einwirkt.

Der Behälter nimmt einen Fluidvorrat auf, auf den die Druckluft bzw. das Vakuum einwirkt.

Es ist wenigstens ein Ventil angeordnet, das die Luft im Behälter mit Überdruck beaufschlagt bzw. einen Unterdruck einstellt.

Wenigstens ein Sensor misst physikalische und/oder chemische Eigenschaften des Mediums. Im Weiteren wird von einem Drucksensor ausgegangen.

Der Behälter ist vorzugsweise aus Kunststoff oder Metall gefertigt.

Im Behälter ist ein Fluidvorrat angeordnet, wobei das Fluid flüssig oder gasförmig sein kann. Das Fluid kann pastös sein und eine vorbestimmte Viskosität aufweisen.

Im Weiteren wird beispielhaft und in keiner Weise ausschließlich davon ausgegangen, dass das Fluid ein flüssiger oder pastös-zähflüssiger Klebstoff ist, der auf ein Substrat aufgebracht wird.

Es versteht sich von selbst, dass das Fluid auch ein anderer Werkstoff oder eine Kombination aus wenigstens zwei Werkstoffen sein kann, wie z. B. Lötzinn, ein Teig, eine Masse zur Herstellung von Kunststoff etc.

Es wird im Weiteren davon ausgegangen, dass der Behälter eine Kartusche ist, die einen befüllbaren Hohlraum aufweist, der zumindest bereichsweise von einer Hülle nach außen abgegrenzt wird.

Die Kartusche weist einen Fluidvorrat auf, der durch die Dosierdüse auf das Substrat aufgebracht werden kann.

Die Kartusche ist auswechselbar, wenn der gesamte Fluidvorrat aus der Kartusche ausgebracht worden ist.

Alternativ kann die Kartusche stationär kontinuierlich wiederbefüllbar ausgebildet sein, sodass ein Austausch der leeren Kartusche gegen eine volle Kartusche nicht erforderlich ist.

Im Innenraum der Kartusche sind der Fluidvorrat und die Druckluft oder das Vakuum angeordnet.

Vorzugsweise ist das Medium über eine Membran von dem Fluidvorrat getrennt.

Soll das Fluid in einer vorbestimmten Menge über die Dosierdüse aus der Kartusche auf das Substrat aufgebracht werden, wird an dem in der Kartusche befindlichen Medium ein Überdruck eingestellt, der bewirkt, dass das Fluid durch die Dosierdüse aus der Kartusche ausgebracht wird.

Die Zeitdauer, für die der Überdruck am Fluid eingestellt wird korrespondiert mit der jeweils auf das Substrat aufzubringenden Menge an Fluid.

Soll kein Fluid aus der Kartusche auf das Substrat aufgebracht werden, so wird an dem in der Kartusche befindlichen Medium ein Unterdruck eingestellt.

Mit Einstellung eines Unterdrucks wird verhindert, dass unbeabsichtigt Fluid aus der Kartusche austritt. Es wird darüber hinaus verhindert, dass z. B. in der Dosierdüse befindliche Luft zurück in die Kartusche gesaugt wird.

Rein beispielhaft und in keiner Weise ausschließlich umfasst die Kartusche ein Innenvolumen von insbesondere 3 cm³, vorzugsweise 10 cm³ und besonders bevorzugt 30 cm³. Das Innenvolumen der Kartusche dient der Aufnahme des Fluids sowie der Aufnahme der auf das Fluid einwirkenden Luft bzw. des Vakuums.

Zur Erzeugung des Überdrucks wird Druckluft in den Innenraum der Kartusche eingeführt. Zur Einstellung eines Vakuums im Behälter wird bevorzugt eine an sich bekannte Venturidüse eingesetzt.

Es versteht sich von selbst, dass zur Erzeugung eines Überdrucks bzw. eines Unterdrucks in der Kartusche auch andere Überdruck- bzw. Unterdruckerzeugungseinrichtungen verwendet werden können.

Das Pneumatik-Modul weist zur Einstellung eines Überdrucks oder eines Unterdrucks am Medium wenigstens ein Ventil auf.

Bevorzugt wird ein Proportionalventil verwendet, mit dem ein stetiger Übergang der Ventilöffnung möglich ist, wodurch veränderliche Medien-Volumenströme gefördert werden können.

Das Proportionalventil ist vorzugsweise als Stromventil oder als Wegeventil ausgebildet.

Statt einem Proportionalventil können auch andere Ventilsysteme, wie z. B. Sperrventile, Stromventile, Rückschlagventile oder Wegeventile zur Absperrung oder zur Regelung des Durchflusses des Mediums eingesetzt werden.

Das Medium, bevorzugt die Druckluft wird in Bezug auf ihre Fließfähigkeit in Leitungen von seinen jeweiligen physikalischen und/oder chemischen Stoffeigenschaft beeinflusst. Die Fließfähigkeit des Mediums ändert sich dabei z.B. in Abhängigkeit z. B. der Dichte, der Wärmeleitfähigkeit, des Aggregatszustands, der Viskosität oder in Abhängigkeit von der Oberflächenspannung des Mediums.

Zur Bestimmung des Überdrucks des Mediums, der erforderlich ist, um die gewünschte Menge an Fluid auf das Substrat aufbringen zu können, müssen die spezifischen physikalischen und/oder chemischen Eigenschaften des jeweiligen in den Leitungen transportierten Mediums bestimmt werden, die das Druckverhältnis des jeweiligen Mediums beeinflussen können.

Zur Bestimmung des am Medium anliegenden Drucks wird vorzugsweise ein Drucksensor eingesetzt.

Es versteht sich von selbst, dass je nachdem, welche physikalisch/chemische Eigenschaft des Mediums zu messen ist, ein entsprechender Sensor eingesetzt wird, der die geforderte Eigenschaft messen kann.

Die Messung der physikalischen bzw. chemischen Eigenschaft des Mediums erfolgt im Pneumatik-Modul.

Das Pneumatik-Modul weist eine Steuerelektronik auf, die die Funktionen der im Pneumatik-Modul angeordneten Ventile, Sensoren, Überdruckerzeuger und/oder Unterdruckerzeuger steuert.

Am Dosierkopf ist wenigstens eine Halterung vorgesehen, mittels der das wenigstens eine Pneumatik-Modul und/oder der wenigstens eine Behälter am Dosierkopf befestigt wird. Der Dosierkopf weist weiter eine Einrichtung zur Höhenverstellung auf, mit der der Dosierkopf an Behälter unterschiedlicher Größe und unterschiedlicher Volumina anpassbar ist.

Es ist ein Dosierkopf der Dosiereinrichtung vorgesehen, der den Behälter umfasst, welcher das Medium und das Fluid aufnimmt.

Vorzugsweise weist der Dosierkopf eine Schnellwechselvorrichtung auf, mit der die Kartusche nach Entleerung gegen eine Ersatzkartusche ausgewechselt werden kann. Es kann eine Andrückfeder vorgesehen sein, um die Kartusche am Dosierkopf zu halten.

Der Dosierkopf umfasst vorzugsweise ein Gehäuse, in dem insbesondere das Pneumatik-Modul, der wenigstens eine Behälter und die wenigstens eine Einrichtung zur Halterung des Behältersangeordnet sind.

Das Pneumatik-Modul ist vorzugsweise im oder am Gehäuse des Dosierkopfes oder zumindest im Bereich des Dosierkopfes angeordnet.

Zur Steuerung des Pneumatik-Moduls oder insbesondere der im oder im Bereich des Dosierkopfes angeordneten Ventile weist der Dosierkopf eine Steuereinrichtung auf.

Die Steuereinrichtung kann auch Versorgungseinrichtungen, wie z. B. die Stromversorgung umfassen.

Der Dosierkopf ist vorzugsweise modular aufgebaut. Hierdurch können je nach Bedarf ansonsten funktionsgleiche Gehäuse, Behälter, insbesondere Kartuschen, Pneumatik-Module miteinander in Form eines Baukastenprinzips kombiniert werden.

Die Dosiereinrichtung weist einen Maschinenkopf auf, der wenigstens eine Einrichtung umfasst, die die Dosierdüse des Dosierkopfes relativ zum Substrat bewegt. Die Einrichtung kann vorzugsweise der Dosierkopf oder das Gehäuse des Dosierkopfes sein. Die Aufzählung ist jedoch nur beispielhaft und nicht ausschließlich gemeint.

Die Bewegung des Maschinenkopfes kann in Bezug auf das Substrat in der X-Ebene, der Y-Ebene und der Z-Ebene erfolgen.

Der Maschinenkopf umfasst das Pneumatik-Modul. Vorzugsweise umfasst der Maschinenkopf auch den Dosierkopf und den Behälter.

Der Maschinenkopf umfasst eine Steuereinrichtung zur Steuerung der im Maschinenkopf umfassten weiteren Aggregate der Dosiereinrichtung.

Zusätzlich sind im bzw. am Maschinenkopf der Dosierkopf und/oder eine Kamera angeordnet.

Der Maschinenkopf kann zur Kombination insbesondere mit dem Dosierkopf und dem Behälter modular ausgebildet sein.

Das Pneumatik-Modul der Dosiereinrichtung erweist sich als äußerst vorteilhaft, da die Leitungen zum Transport des Mediums bevorzugt der Druckluft zwischen dem wenigstens einen Ventil, das die Leitung öffnet oder schließt und dem Behälter, bevorzugt der Kartusche gegenüber bekannten Dosiereinrichtungen eine sehr geringe Länge aufweist.

Bei den bekannten Dosiereinrichtungen sind die Ventile vorzugsweise in einer dezentral angeordneten Steuereinrichtung angeordnet.

Der wenigstens eine Sensor zur Messung der chemisch/physikalischen Eigenschaft des Mediums kann direkt am Behälter oder vorzugsweise am Pneumatik-Modul angeordnet werden.

Ein weiterer Vorteil der Auslagerung des wenigstens einen Ventils und/oder des wenigstens einen Sensors im und/oder am und/oder im Bereich des Pneumatik-Moduls bewirkt eine Dezentralisierung der Komponenten vorzugsweise von der Steuereinrichtung hin zum Pneumatik-Modul.

Auf diese Weise können die Leitungen zum Transport des Mediums zwischen dem Ventil, das einen Überdruck oder einen Unterdruck einstellt und dem Behälter, in dem der Bereich angeordnet ist, in dem des Medium auf das Fluid wirkt wirksam verkürzt werden.

Ein zusätzlicher Vorteil besteht somit in der Verkürzung der Transportwege des Mediums zwischen dem Ort, an dem insbesondere die Luft mit Druck beaufschlagt wird oder an dem das Vakuum eingestellt wird.

Die Gefahr, dass sich auf Grund langer Leitungswege ein Druckverlust des Mediums einstellt, kann aufgehoben oder zumindest deutlich verringert werden.

Die Steuereinrichtung erfordert wegen der Ausgliederung der Ventile, des wenigstens einen Sensors und des wenigstens einen Überdruckerzeugers und/oder des wenigstens einen Unterdruckerzeugers in das Pneumatik-Modul einen relativ geringeren Bauraum.

Die einzelnen Komponenten der Dosiereinrichtung können somit in Bezug auf ihre jeweilige Baugröße weiter minimiert werden.

Die Funktionsweise der vorliegenden Erfindung wird anhand des nachfolgenden Beispiels beschrieben.

Die Dosiereinrichtung umfasst ein Gehäuse der Steuereinrichtung mit einem Boden und einer Platine, die die Rückseite des Gehäuses bildet.

Im Bereich der Rückseite sind ein Lufteinlass und ein Luftauslass angeordnet.

Der Lufteinlass steht über eine Leitung mit dem Unterdruckerzeuger, vorzugsweise einer Venturidüse in Verbindung.

Über die Zuleitung wird einem Luftströmungskanal des Unterdruckerzeugers, bevorzugt der Venturidüse Druckluft zugeführt, um im Bereich einer Verengung des Luftströmungskanals der Venturidüse einen Unterdruck herzustellen.

In der Zuleitung zum Unterdruckerzeuger ist das Proportionalventil angeordnet, das die Stärke der Luftströmung zum Unterdruckerzeuger, vorzugsweise zur Venturidüse regelt.

Erfindungsgemäß ist ein Pneumatik-Modul vorgesehen. Das Pneumatik-Modul ist in einer vorzugsweise druckluftführenden Leitung zwischen dem Gehäuse der Dosiereinrichtung und dem Dosierkopf angeordet.

Das Pneumatik-Modul weist vorzugsweise ein Kupplungselement auf, das über die Schlauchleitung an einem Y-Verzweiger des Dosierkopfes 29 angeschlossen ist. Anstelle des Y-Verzweigers kann auch eine andere Verzeigung in der Leitung zur Förderung des Mediums vorgesehen sein.

Vorzugsweise über einen Y-Verzweiger ist ein Drucksensor mit der Schlauchleitung verbunden, die das Medium vom Pneumatik-Modul zum Behälter 11 fördert.

Das Pneumatik-Modul umfasst wenigstens ein Ventil, das einen Druckimpuls bereitstellt, der vorzugsweise über ein Kupplungselement dem Behälter zugeführt wird.

Der Druckimpuls wird bevorzugt über den Y-Verzweiger und eine Schlauchleitung einem in den Behälter mündenden Einlass oder Flansch zugeführt.

Der Druckimpuls wirkt im Innenraum des Behälters auf das im Behälter angeordnete Fluid ein.

Durch den Druckimpuls wird das Fluid durch eine Dosierdüse aus dem Behälter herausgefördert und auf ein Substrat aufgebracht.

Der Dosierkopf umfasst bevorzugt eine Halterung, die den Behälter insbesondere gegen eine Andruckfeder anpresst und somit eine verliersichere Halterung des Behälters gegenüber dem Dosierkopf bewirkt.

Der Drucksensor des Pneumatik-Moduls umfasst vorzugsweise eine Steuerelektronik, die über eine Datenleitung mit der Platine der Rückseite des Gehäuses der Steuereinrichtung der Dosiereinrichtung in Verbindung steht.

Wenigstens ein Ventil des Pneumatik-Moduls entlüftet die Schlauchleitung, die bevorzugt über das Kupplungselement und den Y-Verzweiger den Behälter mit Druckluft beliefert.

Gleichzeitig ist das Ventil, das die Schlauchleitung entlüftet mit dem Unterdruckerzeuger, insbesondere der Venturidüse verbunden, damit im Behälter ein Unterdruck eingestellt werden kann. Mit der Einstellung des Unterdrucks im Behälter wird bewerkstelligt, dass Fluid weder ungewollt durch die Dosierdüse aus dem Behälter austritt, noch ungewollt Luft durch die Dosierdüse in den Innenraum des Behälters eingesaugt wird.

Im Folgenden werden die Erfindung und deren Ausgestaltungen im Zusammenhang mit den Figuren mehr erläutert. Hierbei zeigen:
- Fig. 1: eine Dosiereinrichtung nach dem Stand der Technik,
- Fig. 2: die Dosiereinrichtung nach Maßgabe der Erfindung und
- Fig. 3: einen Behälter in Form einer Kartusche, mit einem Fluid und einem Medium.

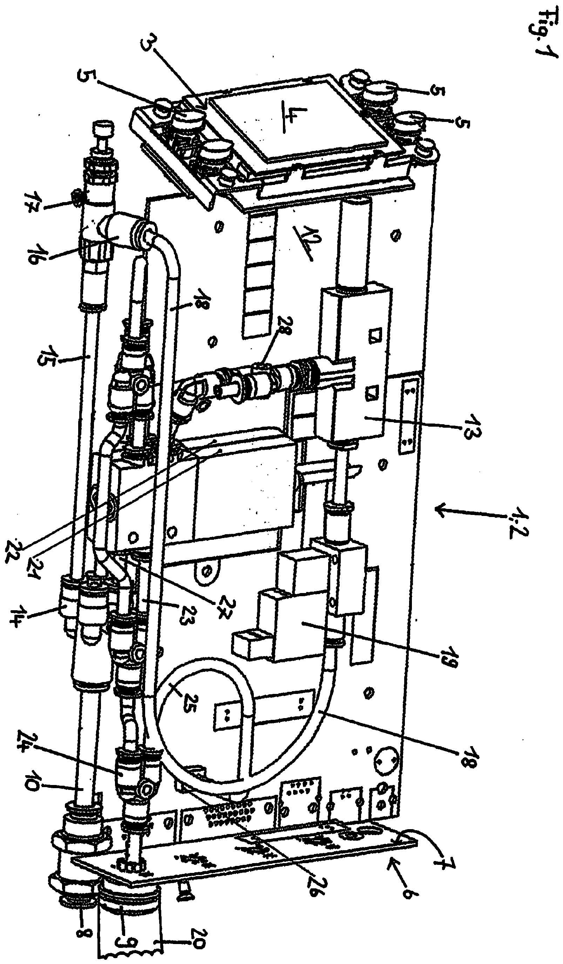

Fig.1 zeigt ein Gehäuse 2 einer Steuereinrichtung einer Dosiereinrichtung 1, das eine Vorderseite 3 und eine Rückseite 6 umfasst.

Die Vorderseite 3 weist wenigstens ein Anzeigeelement 4 und weitere Bedienelemente 5 auf.

Die Rückseite 6 des Gehäuses 2 wird von einer Platine 7 gebildet.

Im Bereich der Rückseite 6 sind in Figur 1 ein Lufteinlass 8, ein Luftauslass 9 angeordnet.

Der Luftauslass 9 ist über eine schematisch dargestellte Schlauchleitung 20 mit dem nicht gezeigten Behälter 11 verbunden.

Das Gehäuse 2 der Steuereinrichtung der Dosiereinrichtung 1 umfasst neben der Vorderseite 3 und der Rückseite 6 einen Boden 12, der zur Bildung des Gehäuses 2 die Vorderseite 3 mit der Rückseite 6 verbindet.

Auf dem Boden 12 ist ein Unterdruckerzeuger 13, vorzugsweise eine bereits bekannte Venturidüse dargestellt.

Die Venturidüse 13 weist, wie bereits bekannt, einen nicht gezeigten Luftströmungskanal auf, der eine Verengung umfasst.

Über den Luftströmungskanal wird Druckluft durch die Venturidüse 13 hindurchgeleitet, wobei im Bereich einer Verengung in der Venturidüse 13 ein Unterdruck entsteht.

Die Druckluft strömt durch den Lufteinlass 8 in die Schlauchleitung 10 bis zu einem Y-Verzweiger 14, dessen einer Arm in eine Schlauchleitung 15 einmündet.

Die Schlauchleitung 15 endet an einem Schlauchanschluss 16.

An dem Schlauchanschluss 16 befindet sich ein Druckregler 17 zur Einstellung eines Vordrucks für eine Zuleitung 18, die dem Unterdruckerzeuger 13, vorzugsweise der Venturidüse die Luftströmung bereitstellt, die den Luftströmungskanal des Unterdruckerzeugers 13 durchströmt.

Der am Unterdruckerzeuger 13, vorzugsweise der Venturidüse erzeugte Unterdruck ist abhängig von der Stärke der Luftströmung, die dem Unterdruckerzeuger 13 durch die Zuleitung 18 zugeführt wird.

Zwischen dem Druckregler 17 und dem Unterdruckerzeuger 13 ist in der Zuleitung 18 ein Proportionalventil 19 angeordnet.

Das Proportionalventil 19 ermöglicht eine stufenlose Regulierung des Drucks der Druckluft, die den Luftströmungskanal des Unterdruckerzeugers 13 zur Herstellung eines Vakuums durchströmt.

An der Rückseite 6 des Gehäuses 2 der Steuereinrichtung der Dosiereinrichtung 1 ist ein Luftauslass 9 gezeigt, der über eine Schlauchleitung 20 mit einem nicht gezeigten Behälter eines Dosierkopfes in Verbindung steht.

Auf dem Boden 12 des Gehäuses 2 sind in Fig.1 je ein Ventil 21 und 22 dargestellt.

Das Ventil 21 steht über eine Schlauchleitung 32 mit einem Y-Verzweiger 24 in Verbindung, der einen Druckimpuls vom Ventil 21 der Schlauchleitung 20 zuführt.

Über Y-Verzweiger 24 ist über eine Schlauchleitung 25 ein Drucksensor 26 an die Schlauchleitung 20 angekoppelt, der den in der Schlauchleitung 20 anliegenden Luftdruck misst. Der Drucksensor 26 misst den Druck der Druckluft, die über die Schlauchleitung 20 dem Behälter 11 zugeführt wird.

Das Ventil 22 entlüftet über die Schlauchleitung 27 die Schlauchleitung 20 um den zuvor an den Behälter 11 über die Schlauchleitung 20 angelegten Überdruckimpuls aufzuheben.

Gleichzeitig ist das Ventil 22 über die Schlauchleitung 28 mit dem Unterdruckerzeuger 13, vorzugsweise der Venturidüse verbunden, um nach der Entlüftung der Schlauchleitung 20 über die Schlauchleitung 20 am Behälter 11 ein Vakuum einzustellen.

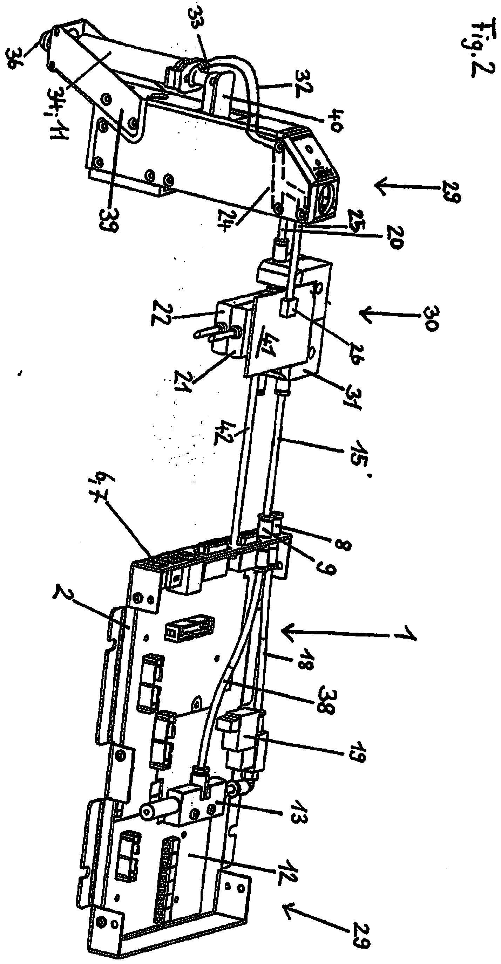

Fig.2 zeigt das Gehäuse 2 der Steuereinrichtung der Dosiereinrichtung 1 mit dem Boden 12 und der Platine 7 an der Rückseite 6.

Im Bereich der Rückseite 6 sind ein Lufteinlass 8 und ein Luftauslass 9 dargestellt.

Der Lufteinlass 8 steht über eine Zuleitung 18 mit dem Unterdruckerzeuger 13, vorzugsweise einer Venturidüse in Verbindung.

Über die Zuleitung 18 wird dem Luftströmungskanal des Unterdruckerzeugers 13, bevorzugt der Venturidüse 13, Druckluft zugeführt, um im Bereich der Verengung des Luftströmungskanals (nicht gezeigt) der Venturidüse 13 einen Unterdruck herzustellen.

In der Zuleitung 18 zum Unterdruckerzeuger 13 ist das Proportionalventil 19 dargestellt, das die Stärke der Luftströmung zum Unterdruckerzeuger 13, vorzugsweise zur Venturidüse regelt.

Zwischen dem Gehäuse 2 der Steuereinrichtung der Dosiereinrichtung 1 und einem Dosierkopf 29 ist das Pneumatik-Modul 30 angeordnet.

Das Pneumatik-Modul 30 ist in der wenigstens einen druckluftführenden Leitung 15 zwischen dem Gehäuse 2 der Dosiereinrichtung und dem Dosierkopf 29 angeordet.

Ein Kupplungselement 31 ist über die Schlauchleitung 20 an den Y-Verzweiger 24 im Dosierkopf 29 angeschlossen.

Der eine Arm des Y-Verzweigers 24 verbindet die Schlauchleitung 20 mit einer Schlauchleitung 32, die über einen Einlass 33 in den Behälter 11 einmündet.

Der andere Arm des Y-Verzweigers 24 mündet in die Schlauchleitung 25, die mit dem Drucksensor 26 in Verbindung steht.

Im Pneumatik-Modul 30 sind die Ventile 21 und 22 angeordnet.

Das Ventil 21 stellt einen Druckimpuls bereit, der über das Kupplungselement 31 der Schlauchleitung 20 zugeführt wird.

Der Druckimpuls wird über den Y-Verzweiger 24 und die Schlauchleitung 32 über den Einlass 33 in den Behälter 11 eingeführt.

Der Druckimpuls wirkt im Innenraum 34 des Behälters 11 auf ein nicht gezeigtes Fluid 35 ein.

Durch den Druckimpuls wird das Fluid 35 durch eine Dosierdüse 36 aus dem Behälter 11 herausgefördert und auf ein nicht dargestelltes Substrat 37 aufgebracht.

Der Dosierkopf 29 umfasst eine Halterung 39, die den Behälter 11 gegen eine Andruckfeder 40 anpresst und somit eine verliersichere Halterung des Behälters 11 gegenüber dem Dosierkopf 29 bewirkt.

Der Drucksensor 26 des Pneumatik-Moduls 30 umfasst eine Steuerelektronik 40, die über eine Datenleitung 41 mit der Platine 7 der Rückseite 6 des Gehäuses 2 der Steuereinrichtung der Dosiereinrichtung 1 in Verbindung steht.

Das Ventil 22 des Pneumatik-Moduls 30 entlüftet die Schlauchleitung 20, die über das Kupplungselement 31 und den Y-Verzweiger 24 den Behälter 11 mit Druckluft beliefert.

Gleichzeitig ist das Ventil 22 über das Kupplungselement 31 des Pneumatik-Moduls 30 mit der Schlauchleitung 15 verbunden, so dass mit Entlüftung der Schlauchleitung 20 über die Zuleitung 38 am Behälter 11 ein Unterdruck eingestellt wird, damit das Fluid 35 weder ungewollt aus dem Behälter 11 durch die Dosierdüse 36 austritt, noch ungewollt Luft durch die Dosierdüse 36 in den Innenraum 34 des Behälters 11 eingesaugt wird.

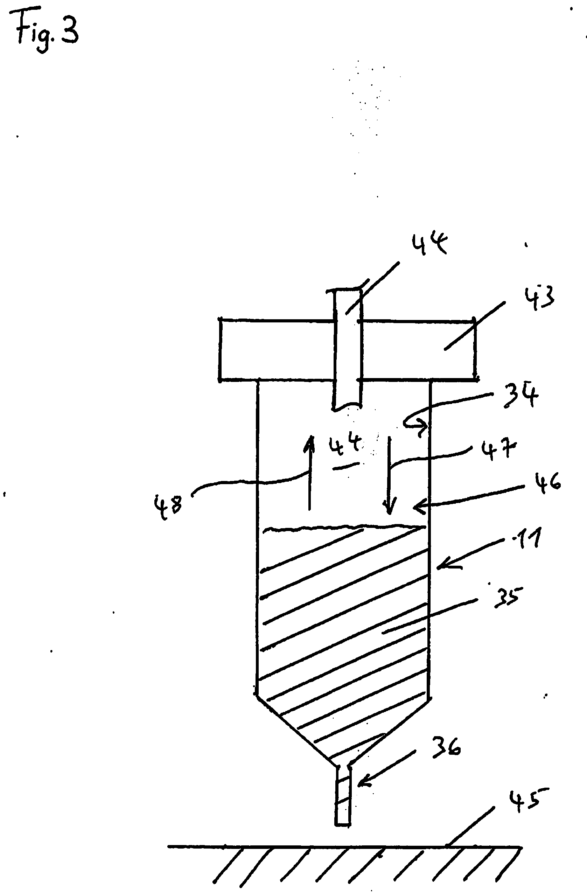

Fig. 3 zeigt den Behälter 11 in Form einer Kartusche mit einem Innenraum 34, der an seinem unteren Ende eine Dosierdüse 36 aufweist. An seinem anderen, der Dosierdüse 36 gegenüberliegenden Ende weist der Behälter 11 einen Flansch 43 auf, über den zur Einstellung eines Überdrucks am Medium 44 weiteres Medium 44 in den Innenraum 34 zugeführt wird.

In dem Innenraum 34 der Kartusche 11 wird das Fluid 35 dargestellt, was aus der Kartusche 11 in die Dosierdüse 36 hineinreicht, um aus der Dosierdüse 36 auf ein Substrat 45 aufgebracht zu werden.

Auf der von der Dosierdüse 36 abgewandten Seite des Fluids 35 ist im Innenraum 34 der Kartusche 11 ein Bereich 46 erkennbar, in dem das Medium 44 angeordnet ist.

Ist an das Medium 44 im Innenraum 34 der Kartusche 11 ein Überdruck eingestellt, so drückt das Medium 44 das Fluid 35 in Richtung des Pfeils 47, so dass das Fluid 35 durch die Dosierdüse 36 auf das Substrat 45 aufgebracht wird.

Wird im Innenraum 34 der Kartusche 11 dagegen am Medium 44 ein Unterdruck eingestellt, so wirkt eine Kraft in Richtung des Pfeiles 48 auf das Fluid 35 bis ein Zustand erreicht ist, in dem weder das Fluid 35 in ungewollter Weise aus der Dosierdüse 36 austritt noch andererseits Luft von außen durch die Dosierdüse 36 in den Innenraum 34 der Kartusche 11 eingesaugt wird.

### Bezugsziffern

- 1: Dosiereinrichtung
- 2: Gehäuse der Steuereinrichtung
- 3: Vorderseite
- 4: Anzeigeelement
- 5: Bedienelement
- 6: Rückseite
- 7: Platine
- 8: Lufteinlass
- 9: Luftauslass
- 10: Schlauchleitung
- 11: Behälter/Kartusche
- 12: Boden
- 13: Unterdruckerzeuger/Venturidüse
- 14: Y-Verzweiger
- 15: Schlauchleitung
- 16: Schlauchanschluss
- 17: Druckregler
- 18: Zuleitung
- 19: Proportionalventil
- 20: Schlauchleitung
- 21: Ventil (Druckimpuls:ein)
- 22: Ventil (Druckimpuls:aus)
- 23: Schlauchleitung
- 24: Y-Verzweiger
- 25: Schlauchleitung
- 26: Drucksensor
- 27: Schlauchleitung
- 28: Schlauchleitung
- 29: Dosierkopf
- 30: Pneumatik-Modul
- 31: Kupplungselement
- 32: Schlauchleitung
- 33: Einlass
- 34: Innenraum
- 35: Fluid
- 36: Dosierdüse
- 37: Substrat
- 38: Schlauchleitung
- 39: Halterung
- 40: Andruckfeder
- 41: Steuerelektronik
- 42: Datenleitung
- 43: Flansch
- 44: Medium
- 45: Substrat
- 46: Bereich
- 47: Pfeil
- 48: Pfeil

## Patentansprüche

1. Pneumatik-Modul einer Dosiereinrichtung (1) zur Beaufschlagung eines in einem Behälter (11) angeordneten Mediums (44) mit einem Unterdruck oder einem Überdruck, wobei der Behälter (11) einen Fluidvorrat (35) aufnimmt, auf den das Medium (44) einwirkt, **dadurch gekennzeichnet dass** das Pneumatik-Modul (30) wenigstens ein den Überdruck und/oder den Unterdruck des Mediums (44) einstellendes Ventil (21; 22) aufweist und/oder wenigstens einen Sensor (26) umfasst, der physikalische und/oder chemische Eigenschaften des Mediums (44) misst.

2. Pneumatik-Modul nach Anspruch 1, **dadurch gekennzeichnet, dass** das Pneumatik-Modul (30) eine Steuereinrichtung umfasst.

3. Pneumatik-Modul nach Anspruch 1, **dadurch gekennzeichnet, dass** das Pneumatik-Modul (30) einen Unterdruckerzeuger (13) und/oder einen Überdruckerzeuger (21) aufweist.

4. Pneumatik-Modul nach Anspruch 1, **dadurch gekennzeichnet, dass** der Sensor (26) ein Drucksensor ist.

5. Pneumatik-Modul nach Anspruch 1, **dadurch gekennzeichnet, dass** der Sensor (26) ein Temperatursensor ist.

6. Pneumatik-Modul nach Anspruch 1, **dadurch gekennzeichnet, dass** das Ventil (19) ein Proportionalventil ist.

7. Pneumatik-Modul nach Anspruch 1, **dadurch gekennzeichnet, dass** der Unterdruckerzeuger (13) eine Venturidüse ist.

8. Dosierkopf einer Dosiereinrichtung (1) zur Aufbringung eines Fluids (35) aus dem Behälter (11) für den Fluidvorrat (35) über eine Dosierdüse (36) auf ein Substrat (45), wobei der Behälter (11) auf der von der Dosierdüse (36) abgewandten Seite des Fluidvorrats (35) einen Bereich (46) aufweist, in dem das beaufschlagte Medium (44) angeordnet ist, **dadurch gekennzeichnet, dass** der Dosierkopf (29) das Pneumatik-Modul (30) umfasst.

9. Dosierkopf nach Anspruch 7, **dadurch gekennzeichnet, dass** der Dosierkopf (29) eine Steuereinrichtung umfasst.

10. Dosierkopf nach Anspruch 7, **dadurch gekennzeichnet, dass** der Dosierkopf (29) modular ausgebildet ist.

11. Maschinenkopf einer Dosiereinrichtung (1) zur Bewegung wenigstens der die Dosierdüse (36) des Dosierkopfes (29) umfassenden Einrichtung relativ zum Substrat (45) zur Aufbringung des Fluids (35) auf das Substrat (45), wobei der Maschinenkopf das Pneumatik-Modul (30) umfasst.

12. Maschinenkopf nach Anspruch 10, **dadurch gekennzeichnet, dass** der Maschinenkopf eine Steuereinrichtung umfasst.

13. Maschinenkopf nach Anspruch 10, **dadurch gekennzeichnet, dass** der Maschinenkopf den Dosierkopf (29) umfasst.

14. Maschinenkopf nach Anspruch 10, **dadurch gekennzeichnet, dass** der Maschinenkopf eine Kamera umfasst.

15. Maschinenkopf nach Anspruch 10, **dadurch gekennzeichnet, dass** der Maschinenkopf modular ausgebildet ist.
